Europäisches Patentamt

European Patent Office

Office européen des brevets

(19)

(11) Veröffentlichungsnummer: **0 076 471**
**B1**

(12)

# EUROPÄISCHE PATENTSCHRIFT

(45) Veröffentlichungstag der Patentschrift:
**18.12.85**

(21) Anmeldenummer: **82109040.4**

(22) Anmeldetag: **30.09.82**

(51) Int. Cl.⁴: **C 08 L 75/04,** C 08 L 71/02,
C 08 L 67/00, C 08 G 18/32,
C 08 J 9/00, C 08 K 5/00

(54) **Stabilisieren von Polyether- oder Polyester-Formmassen gegen vorzeitige Reaktion.**

(30) Priorität: **03.10.81 DE 3139401**

(43) Veröffentlichungstag der Anmeldung:
**13.04.83 Patentblatt 83/15**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**DE - C - 1 207 626**
**US - A - 3 352 789**

**Patent Abstracts of Japan Band 6, Nr. 169, 2. September 1982**
**Patent Abstracts of Japan Band 5, Nr. 54, 15 April 1981**
**Chemical Abstracts Band 97, Nr. 14, 4. Oktober 1982, Columbus, Ohio, USA Seite 37, Spalte 1, Abstract Nr. 110873x**

(73) Patentinhaber: **HOECHST AKTIENGESELLSCHAFT,**
**Postfach 80 03 20, D-6230 Frankfurt am Main 80 (DE)**

(72) Erfinder: **Hoffmann, Bernd, Völklinger Weg 64,**
**D-6000 Frankfurt am Main 71 (DE)**
Erfinder: **Behme, Klaus-Jürgen, Kurmalnzerstrasse 25,**
**D-6239 Eppstein/Taunus (DE)**

## Beschreibung

Die Erfindung betrifft die Verwendung einer neuen Stabilisator-Kombination zum Stabilisieren von Mischungen, die zur Herstellung von Polyurethan-Schaum verwendet werden.

Chlorfluoralkane werden in grossem Mass als Blähmittel in Verbindung mit Polyestern oder Polyethern, die mit mehrwertigen Isocyanaten zu Polyurethanschäumen umgesetzt werden, verwendet. Die eingesetzten Polyester- oder Polyethermassen sind Gemische aus Verbindungen mit aktivem Wasserstoff, in der Hauptsache Polyole und Aminopolyole, die noch niedermolekulare Komponenten, wie z.B. Amine und Aminalkohole (als Katalysator), enthalten können. In der Praxis vermischt man zunächst die Verbindungen mit aktivem Wasserstoff unter Zusatz von Katalysatoren, oberflächenaktiven Mitteln, flammhemmenden Zusätzen und Wasser. Dieses Gemisch wird erst am Einsatzort mit dem Polyisocyanat zur Herstellung des Polyurethan-Schaumstoffs vereinigt und zur Reaktion gebracht. Daher ist es mitunter erforderlich, diese Schaumsysteme über mehrere Monate lagerstabil zu halten. Es hat sich jedoch gezeigt, dass die Hydroxylgruppen enthaltenden Aminoverbindungen mit Chlorfluoralkanen, insbesondere Trichlor-fluormethan und Trichlor-trifluorethan, unter Abspaltung von Chlorwasserstoff und Bildung von Aldehyd und Wasserstoff enthaltendem Chlorfluoralkan reagieren. Solche Produkte führen zur Verfärbung und mitunter zu kristallinen Ausscheidungen in dem verschäumbaren Gemisch und stören weiterhin die Verschäumungsreaktion.

Aus der DE-C-1 207 626 ist es bekannt, dass ungesättigte Verbindungen wie z.B. Butadien, Isopren, Styrol, α-Methylstyrol oder 1-Alkene mit 4 bis 18 Kohlenstoffatomen als Stabilisator für solche verschäumbaren Massen eingesetzt werden können. Nahe verwandte olefinische Verbindungen, wie z.B. 2-Buten, Vinylacetat oder Methyl-vinyl-keton sind für den gleichen Zweck unwirksam oder praktisch unwirksam (Spalte 1, Zeile 33 - 39). Aus der DE-C-1 618 291 ist bekannt, dass auch p-Isopropenyl-toluol (= p-Methyl-α-methylstyrol) die Umsetzung des Aminogruppen enthaltenden Polyols mit dem Chlorfluoralkan zu inhibieren vermag.

Es ist nachteilig, dass die vorgeschlagenen Substanzen einen relativ niedrigen Flammpunkt aufweisen. Gemäss Verordnung über brennbare Flüssigkeiten ist ein Arbeitsstoff, dessen Flammpunkt unter 100°C liegt, kennzeichnungspflichtig. Solche Stoffe müssen bei der Einarbeitung in technischem Massstab mit besonderer Vorsicht gehandhabt werden. Einige der bekannten Stabilisatoren sind toxikologisch bedenklich. Schliesslich besteht die Gefahr, dass diese Substanzen durch verschiedene Einflüsse polymerisieren, was vor oder auch nach ihrer Einarbeitung in das verschäumbare System erfolgen kann.

Es bestand daher die Aufgabe, ein neues Stabilisator-System zu finden, das diese Nachteile nicht aufweist.

Es wurde nun gefunden, dass Zusätze von 0,05 bis 5 Gew.-% (bezogen auf das Gewicht des Chlorfluoralkans) an 2,4-Diphenyl-4-methyl-penten zu Gemischen, die Amine mit primären oder sekundären aliphatischen Hydroxylgruppen sowie übliche Mengen von Trichlor-trifluorethan oder Trichlor-trifluormethan als Bindemittel enthalten, geeignet sind, die vorzeitige Reaktion der Komponenten zu unterdrücken. Das angegebene 2,4-Diphenyl-4-methyl-penten besteht aus den beiden Isomeren 2,4-Diphenyl-4-methyl-penten-(1) und 2,4-Diphenyl-4-methyl-penten-(2). Das Isomerenverhältnis Penten-(1) / Penten-(2) beträgt insbesondere 1:1 bis 9:1. Das als Blähmittel verwendete Trichlor-trifluorethan hat die Formel $CF_2Cl-CCl_2F$.

Anstelle des Gemisches der beiden Pentene lässt sich auch ein technisches Gemisch einsetzen, das neben diesen beiden Komponenten noch einen geringen Anteil an 1,1,3-Trimethyl-3-phenyliden enthält. Ein solches Gemisch ist z.B. nach dem Verfahren der US-A-2 429 719 erhältlich und enthält im allgemeinen 45 bis 89 Gew.-% 2,4-Diphenyl-4-methyl-penten-(1), 10 bis 45 Gew.-% 2,4-Diphenyl-4-methyl-penten-(2) und 1 bis 20 Gew.-% 1,1,3-Trimethyl-3-phenyl-indan.

Besonders bevorzugte Bereiche sind 50 bis 60, insbesondere 55 bis 65 Gew.-% des Pentens-(1), 20 bis 40, insbesondere 25 bis 35 Gew.-% des Pentens-(2) und 5 bis 15 Gew.-% des Indan-Derivats.

Das Stabilisatorgemisch stellt eine farblose, praktisch geruchlose, neutrale Flüssigkeit mit einer Viskosität von ca. mPa.s (bei 20°C) dar. Es nicht selbstentzündlich, nicht explosionsgefährlich, nicht lichtempfindlich und neigt nicht zur Polymerisation. Der Flammpunkt liegt bei 120°C, so dass der Stabilisator nicht mehr einer Gefahrenklasse gemäss der deutschen Verordnung über brennbare Flüssigkeiten (VbF) zuzuordnen ist.

Der Stabilisator ist mit den genannten Chlorfluoralkanen in jedem Verhältnis mischbar, lässt sich also ohne Schwierigkeiten in geringer Konzentration in Trichlor-fluormethan oder Trichlor-trifluorethan einarbeiten. Auch eine gute Löslichkeit in den weiteren Verschäumungskomponenten ist gegeben. Der Stabilisator verhindert die Zersetzung von Aminoalkoholen mit einer, insbesondere aber mit mehreren Hydroxylgruppen.

Es ist überraschend, dass sich der vorgeschlagene Stoff eignet, die Zersetzung von Chlorfluoralkanen in Gegenwart von Aminoalkoholen zu verhindern bzw. zu verzögern. Ein weiterer Vorteil des erfindungsgemässen Inhibitor-Gemischs ist die ölige Konsistenz und die gute Stabilität. Chlorfluoralkane werden oft mittels Kolbenpumpen in die anderen Komponenten dosiert und müssen in diesen Fällen ein Schmiermittel, z.B. Dioctylphthalat, enthalten. Da der Stabilisator als Schmiermittel wirkt, kann er gleichzeitig diese Aufgabe mit erfüllen.

Die Erfindung wird durch die folgenden Beispiele näher erläutert.

### Beispiel 1

Gemische, die aus 90 Gew.-% Triethanolamin und 10 Gew.-% Trichlorfluormethan bestehen, wurden mit wechselnden Mengen verschiedener Stabilisatoren versetzt und verschiedene Zeiten bei 40°C gelagert. Die Ergebnisse der Lagerversuche sind in Tabelle I dargestellt. Der in Versuch 2 erfindungsgemäss verwendete Stabilisator hatte folgende Zusammensetzung:

ca. 60 Gew.-% 2,4-Diphenyl-4-methyl-penten-(1)
ca. 30 Gew.-% 2,4-Diphenyl-4-methyl-penten-(2) und
ca. 10 Gew.-% 1,1,3-Trimethyl-3-phenyliden.

Die in den anderen Versuchen als Vergleichsstabilisatoren eingesetzten olefinischen Verbindungen sind aus der Patentliteratur entnommen. Die Menge der Spaltprodukte (Dichlorfluormethan und Chlorwasserstoff) ist in Gewichtsprozent (bezogen auf die gesamte Mischung) angegeben. Der Ausdruck «n.g.» bedeutet, dass in diesem Fall die Menge der Spaltprodukte nicht gemessen wurde.

Aus der Tabelle ist zu ersehen, dass sich nahestehende Verbindungen in ihrer Eignung sehr unterscheiden und sogar völlig ungeeignet sein können.

Zur Durchführung der Prüfungen wurden jeweils 50 g Gemisch in Aerosol-Glasflaschen eingewogen und diese sofort gasdicht verschlossen. Nach der angegebenen Zeit wurden die Gemische nach ihrem optischen Aussehen beurteilt und bei Bedarf auf die möglichen Spaltprodukte hin analysiert.

### Beispiel 2

Untersucht wurden bei 40°C Gemische aus 10 Gew.-% Trichlor-fluormethan und 90 Gew.-% eines Polyols C mit folgender Zusammensetzung:

(Polyolsystem C für PUR-Hartschaum)

50 Masse-Teile oxpropyliertes Trimethylolpropan der Hydroxylzahl von 380
40 Masse-Teile oxpropyliertes Ethylendiamin der Hydroxylzahl von 450
10 Masse-Teile Triethanolamin
0,8 Masse-Teile Wasser
1,5 Masse-Teile handelsübliches Polysiloxan
1,0 Masse-Teile Triethylamin
0,7 Masse-Teile Methyl-bis-dimethylaminoethyl-amin

Der in Versuch 13 erfindungsgemäss verwendete Stabilisator hat die gleiche Zusammensetzung wie in Versuch 2 von Beispiel 1. Das Ergebnis der Versuche wird in Tabelle II dargestellt.

### Beispiel 3

Es wird untersucht das Verhalten von Gemischen aus 95 Gew.-% Trichlor-fluormethan und 5 Gew.-% Inhibitor bei 50°C (in Abwesenheit eines Hydroxylgruppen enthaltenden Amins). Die Ergebnisse sind in Tabelle III dargestellt. Es zeigt sich, dass α-Methylstyrol im Gemisch mit Trichlor-fluormethan nach kurzzeitiger Lagerung eine weisse flockige Ausfällung bildet. Diese Ausfällung lässt sich nach kräftigem Schütteln wieder im Trichlor-fluormethan lösen; jedoch fällt dieses weisse Polymerisat beim bestimmungsgemässen Gebrauch dieser Lösung, d.h. beim Vermischen mit einem Polyolsystem wieder aus und geht auch nach kräftigem Schütteln nicht mehr in Lösung. Diesen Nachteil weist das erfindungsgemäss einzusetzende Stabilisatorsystem nicht auf.

### Beispiel 4

Mischungen verschiedener Polyole (90 Gew.-%) und 10 Gew.-% Trichlor-fluormethan wurden 90 Tage bei 30°C gelagert und anschliessend das Aussehen der Mischung beurteilt. Das Ergebnis ist in der Tabelle IV dargestellt. In Spalte 3 («Stabilisator») ist die Menge (Gew.-% bezogen auf Trichlor-fluormethan) des in Beispiel 1, Versuch 2 genannten Stabilisators angegeben. Das Polyol B stellt ein oxpropyliertes Ethylendiamin mit der Hydroxylzahl 450 dar. Das Polyol D ist ein Polyolsystem für PUR-Kaltformschaum und hat folgende Zusammensetzung:

100 Masse-Teile Glycerin/Propylenoxid-Ethylenoxid-Additionsverbindung der Hydroxylzahl von 35 mit überwiegend primären Hydroxylgruppen
2 Masse-Teile Triethanolamin
3 Masse-Teile Wasser
0,5 Masse-Teile Polysiloxan-Schaumstabilisator
0,5 Masse-Teile Dimethylaminoethanol
0,8 Masse-Teile Triethylendiamin gelöst in Dipropylenglykol (33%ig).

Die Versuche zeigen die gute Wirksamkeit des erfindungsgemäss einzusetzenden Stabilisatorsystems in Gegenwart von Trichlor-fluormethan.

### Beispiel 5

Ein Gemisch bestehend aus 90 Gew.-% Triethanolamin und 10 Gew.-% 1,1,2-Trichlor-1,2,2-trifluorethan wurde 90 Tage bei 30°C gelagert. Die Ergebnisse sind in der Tabelle V dargestellt. In Spalte 2 ist die Menge an Stabilisator von Beispiel 1, Versuch 2 (in Gew.-% bezogen auf $C_2Cl_3F_3$) angegeben. Es ist zu erkennen, dass dieser Stabilisator auch in Anwesenheit von Trichlor-trifluorethan wirksam ist.

### Beispiel 6

Gemische, bestehend aus 50 Gew.-% des in Beispiel 4 verwendeten Katalysators Dimethylaminoethanol und 50 Gew.-% Trichlorfluormethan wurden ohne und mit Stabilisator bis zu 180 Tagen bei 30°C gelagert. Die Ergebnisse sind in der Tabelle VI dargestellt. Es ist zu erkennen, dass dieser Stabilisator auch die vorzeitige Reaktion des Halogenkohlenwasserstoffs mit einem Amin verhindert, das nur eine einzige Hydroxylgruppe enthält.

## TABELLE I

| Vers. | Lagerzeit Tage | Inhibitor 1% auf CCl$_3$F | Aussehen der Mischung | Spaltprodukte % CHCl$_2$F | % HCl |
|---|---|---|---|---|---|
| 1 | 4 | ohne | braun, pastös | 1,6 | 0,34 |
| 2 | 1 | 2,4-Diphenyl-4-methylpenten | hell, klar | 0,05 | 0,02 |
| | 4 | « | « | n.g. | n.g. |
| | 10 | « | « | n.g. | n.g. |
| | 18 | « | gelb, klar | 0,05 | 0,04 |
| | 30 | « | « | 0,07 | 0,06 |
| 4 | 1 | α-Methylstyrol | hell, klar | n.g. | n.g. |
| | 4 | « | « | n.g. | n.g. |
| | 10 | « | « | n.g. | n.g. |
| | 18 | « | gelb, trüb | n.g. | n.g. |
| | 30 | « | « | 0,05 | 0,04 |
| 5 | 1 | Camphen | hell, klar | n.g. | n.g. |
| | 4 | « | « | n.g. | n.g. |
| | 10 | « | gelb, klar | n.g. | n.g. |
| | 18 | « | braun, trüb | n.g. | n.g. |
| | 30 | « | « | 0,2 | 0,11 |
| 6 | 1 | Dicyclopentadien | hell, klar | n.g. | n.g. |
| | 4 | « | gelb, klar | n.g. | n.g. |
| | 10 | « | braun, trüb | n.g. | n.g. |
| | 18 | « | « | n.g. | n.g. |
| | 30 | « | braun, pastös | 0,4 | 0,21 |
| 7 | 1 | Stilben | hell, klar | n.g. | n.g. |
| | 4 | « | gelb, klar | n.g. | n.g. |
| | 10 | « | braun, trüb | n.g. | n.g. |
| | 18 | « | braun, pastös | n.g. | n.g. |
| | 30 | « | « | 1,0 | 0,38 |
| 8 | 1 | 2,4,4-Trimethyl-1-penten | hell, klar | n.g. | n.g. |
| | 4 | « | gelb, klar | n.g. | n.g. |
| | 10 | « | braun, pastös | n.g. | n.g. |
| | 18 | « | « | n.g. | n.g. |
| | 30 | « | « | 1,6 | 0,34 |
| 9 | 4 | Hexafluorpropen | braun, pastös | n.g. | n.g. |
| 10 | 4 | Morpholinocyclohexen-1 | braun, pastös | n.g. | n.g. |
| 11 | 30 | Acrylnitril | braun, trüb | 1,1 | 0,36 |

## TABELLE II

| Vers. | Lagerzeit Tage | Inhibitor 1% auf CCl$_3$F | Aussehen der Mischung | Spaltprodukte % CHCl$_2$F | % HCl |
|---|---|---|---|---|---|
| 12 | 1 | ohne | braun, klar | 0,1 | 0,06 |
| | 3 | « | braun, trüb | 0,3 | 0,15 |
| | 10 | « | schwarz, pastös | 0,7 | 0,30 |
| 13 | 1 | 2,4-Diphenyl-4-methyl-penten | hell, klar | n.g. | n.g. |
| | 3 | « | gelb, klar | 0,05 | 0,02 |
| | 10 | « | « | n.g. | n.g. |
| | 16 | « | « | n.g. | n.g. |
| | 30 | « | braun, klar | 0,11 | 0,07 |
| 14 | 1 | α-Methylstyrol | hell, klar | n.g. | n.g. |
| | 3 | « | gelb, trüb | 0,05 | 0,02 |
| | 10 | « | « | n.g. | n.g. |
| | 16 | « | « | n.g. | n.g. |
| | 30 | « | braun, trüb | 0,10 | 0,06 |

### TABELLE III

| Vers. | Lagerzeit Tage | Inhibitor | Aussehen der Mischung |
|---|---|---|---|
| 15 | 1 | α-Methylstyrol | ohne Befund |
|  | 7 | « | weisse flockige Ausfällung |
| 16 | 7 | 2,4-Diphenyl-4-methyl-penten | hell, klar |
|  | 30 | « | « |
|  | 90 | « | « |
|  | 180 | « | « |

### TABELLE IV

| Vers. | Polyol | Stabilisator % | Aussehen der Mischung | Spaltprodukte % $CHCl_2F$ | % HCl |
|---|---|---|---|---|---|
| 17 | Triethanol-amin | 0 | braun, pastös | 6,0 | 2,0 |
| 18 | « | 0,05 | « | n.g. | n.g. |
| 19 | « | 0,25 | braun, klar | 0,2 | 0,12 |
| 20 | « | 0,5 | gelb, klar | 0,1 | 0,07 |
| 21 | « | 1 | « | 0,1 | 0,05 |
| 22 | « | 3 | hell, klar | 0,05 | 0,02 |
| 23 | « | 5 | « | n.g. | n.g. |
| 24 | B | 0 | braun, klar | 1,1 | 0,70 |
| 25 | B | 0,5 | gelb, klar | 0,1 | 0,08 |
| 26 | B | 1 | « | 0,1 | 0,06 |
| 27 | B | 2 | hell, klar | 0,05 | 0,04 |
| 28 | C | 0 | braun, trüb | 0,6 | 0,33 |
| 29 | C | 0,5 | gelb | 0,1 | 0,05 |
| 30 | C | 1 | gelb, klar | 0,05 | 0,04 |
| 31 | C | 2 | hell, klar | 0,05 | 0,02 |
| 32 | D | 0 | gelb, trüb | 0,1 | 0,05 |
| 33 | D | 0,5 | hell, klar | 0,05 | 0,01 |
| 34 | D | 1 | « | n.g. | n.g. |
| 35 | D | 2 | « | n.g. | n.g. |

### TABELLE V

| Vers. | Stabilisator % | Aussehen der Mischung | Spaltprodukte % $C_2HCl_2F_3$ | % HCl |
|---|---|---|---|---|
| 36 | 0 | braun, pastös | 3,9 | 1,6 |
| 37 | 0,05 | « | n.g. | n.g. |
| 38 | 0,25 | braun, klar | 0,3 | 0,15 |
| 39 | 0,5 | gelb, klar | n.g. | 0,08 |
| 40 | 1 | « | 0,1 | 0,06 |
| 41 | 3 | hell, klar | 0,05 | 0,02 |
| 42 | 5 | « | 0,05 | 0,02 |

### TABELLE VI

| Vers. | Lagerzeit Tage | Stabilisator 1% auf $CCl_3F$ | Aussehen der Mischung | Spaltprodukte % $CHCl_2F$ | % HCl |
|---|---|---|---|---|---|
| 43 | 1 | ohne | hell, klar | n.g. | n.g. |
|  | 60 | « | braun, klar | 0,3 | 0,20 |
|  | 120 | « | « | 0,7 | 0,45 |
| 44 | 1 | 2,4-Diphenyl-4-methyl-penten | hell, klar | n.g. | n.g. |
|  | 60 | « | « | 0,05 | 0,02 |
|  | 120 | « | « | 0,05 | 0,03 |
|  | 180 | « | gelb, klar | 0,1 | 0,05 |

## Patentansprüche

1. Verwendung von 0,05 bis 5 Gew.-% 2,4-Diphenyl-4-methyl-penten, wobei das Isomerenverhältnis 2,4-Diphenyl-4-methyl-penten-(1) / 2,4-Diphenyl-4-methyl-penten-(2) 1:1 bis 9:1 beträgt zum Stabilisieren von Gemischen, die Amine mit primären oder sekundären aliphatischen Hydroxylgruppen sowie übliche Mengen von Trichlor-trifluorethan und/ oder Trichlor-fluormethan als Blähmittel enthalten, gegen die vorzeitige Reaktion der Komponenten, wobei sich die Prozentzahlen auf das Chlorfluoralkan beziehen.

2. Verwendung von 0,1 bis 5 Gew.-% bezogen auf Chlorfluoralkan eines Stabilisatorgemisches bestehend aus
45 bis 89 Gew.-% 2,4-Diphenyl-4-methyl-penten-(1),
10 bis 45 Gew.-% 2,4-Diphenyl-4-methyl-penten-(2) und
1 bis 20 Gew.-% 1,1,3-Trimethyl-3-phenylindan zum Stabilisieren von Gemischen, die Amine mit primären oder sekundären aliphatischen Hydroxylgruppen sowie übliche Mengen von Trichlor-trifluorethan und/oder Trichlor-fluormethan als Blähmittel enthalten, gegen die vorzeitige Reaktion der Komponenten.

3. Ausführungsform gemäss Anspruch 1 oder 2, dadurch gekennzeichnet, dass das Gemisch ein Amin mit mehreren primären oder sekundären aliphatischen Hydroxylgruppen enthält.

4. Verfahren zum Stabilisieren einer Mischung, die Amine mit primären oder sekundären aliphatischen Hydroxylgruppen sowie übliche Mengen an Trichlorfluormethan und/oder Trichlortrifluoräthan als Blähmittel enthält und die mit Polyisocyanat unter Bildung eines Polyurethan-Schaums reagiert, gegen die vorzeitige Reaktion der Komponenten der Mischung, dadurch gekennzeichnet, dass man in die Mischung 0,05 bis 5 Gewichtsprozent (bezogen auf das Chlorfluoralkan) 2,4-Diphenyl-4-methyl-penten einarbeitet.

5. Blähmittel für die Herstellung von Polyurethanschäumen, das gegen die Reaktion der primären und sekundären Hydroxylgruppen von Aminoalkoholen stabilisiert ist und aus Trichlorfluormethan und/oder Trichlortrifluoräthan besteht, dadurch gekennzeichnet, dass es 0,05 bis 5 Gew.-% (bezogen auf Chlorfluoralkan) an 2,4-Diphenyl-4-methylpenten enthält.

## Claims

1. The use of 0.05 to 5% by weight of 2,4-diphenyl-4-methylpentene in which the ratio of the 2,4-diphenyl-4-methyl-1-pentene isomer to the 2,4-diphenyl-4-methyl-2-pentene isomer is 1:1 to 9:1 for stabilizing mixtures containing amines having primary or secondary aliphatic hydroxyl groups, and also customary quantities of trichlorotrifluoroethane and/or trichlorofluoromethane as a blowing agent, against the premature reaction of the components, the percentages relating to the chlorofluoroalkane.

2. The use of 0.1 to 5% by weight (the percentages relating to the chlorofluoroalkane) of a mixture of stabilizers composed of 45 to 89% by weight of 2,4-diphenyl-4-methyl-1-pentene, 10 to 45% by weight of 2,4-diphenyl-4-methyl-2-pentene and 1 to 20% by weight of 1,1,3-trimethyl-3-phenylindane for stabilizing mixtures containing amines having primary or secondary aliphatic hydroxyl groups, and also customary quantities of trichlorotrifluoroethane and/or trichlorofluoromethane as a blowing agent, against the premature reaction of the components.

3. An embodiment as claimed in claim 1 or 2, wherein the mixture contains an amine having several primary or secondary aliphatic hydroxyl groups.

4. A process for stabilizing a mixture containing amines having primary or secondary aliphatic hydroxyl groups and also customary quantities of trichlorotrifluoroethane and/or trichlorofluoromethane as a blowing agent this mixture being reactive with a polyisocyanate to give a polyurethane foam, against the premature reaction of the components of the mixture by incorporating into the mixture from 0.05 to 0.5% by weight of 2,4-diphenyl-4-methylpentene, the percentages relating to the chlorofluoroalkane.

5. A blowing agent for the preparation of polyurethane foams which is stabilized against the reaction of the primary and secondary hydroxyl groups of amino alcohols which consists of trichloromethane and/or trichlorotrifluoroethane and which is characterized that it contains from about 0.05% to about 5% by weight based on the chlorofluoroalkane of 2,4-diphenyl-4-methyl-pentene.

## Revendications

1. Utilisation de 0,05 à 5% en poids de diphényl-2,4 méthyl-4 pentène, où le rapport des isomères diphényl-2,4 méthyl-4 pentène-(1) / diphényl-2,4 méthyl-4 pentène-(2) est compris entre 1:1 et 9:1, pour la stabilisation de mélanges qui contiennent des amines possédant des groupes hydroxyle aliphatiques primaires ou secondaires ainsi que des quantités habituelles de trichlorotrifluoroéthane et/ou trichlorofluorométhane en tant qu'agents d'expansion, contre la réaction prématurée des constituants, les pourcentages se rapportant au chlorofluoralcane.

2. Utilisation de 0,1 à 5% en poids, sur la base du chlorofluoralcane, d'un mélange stabilisant constitué de 45 à 89% en poids de diphényl-2,4 méthyl-4 pentène-(1), de 10 à 45% en poids de diphényl-2,4 méthyl-4 pentène-(2), et de 1 à 20% en poids de triméthyl-1,1,3 phényl-3 indane, pour la stabilisation de mélanges qui contiennent des amines possédant des groupes hydroxyle aliphatiques primaires ou secondaires ainsi que des quantités courantes de trichlorotrifluoréthane et/ou trichlorofluorométhane en tant qu'agents d'expansion, contre la réaction prématurée des constituants.

3. Forme de réalisation selon la revendication 1 ou 2, caractérisée en ce que le mélange contient une amine possédant plusieurs groupes hydroxyle aliphatiques primaires ou secondaires.

4. Procédé pour la stabilisation d'un mélange qui contient des amines possédant des groupes hydroxyle aliphatique primaires ou secondaires ainsi que des quantités courantes de trichlorofluorométhane et/ou de trichlorotrifluoréthane en tant qu'agents d'expansion, et qui réagit avec un polyisocyanate en formant une mousse de polyuréthanne, contre la réaction prématurée des constituants du mélange, caractérisé en ce qu'on incorpore dans le mélange 0,05 à 5% en poids (sur la base du chlorofluoralcane) de diphényl-2,4 méthyl-4 pentène.

5. Agent d'expansion pour la préparation de mousses de polyuréthanne, qui est stabilisé contre la réaction des groupes hydroxyle primaires et secondaires d'aminoalcools et est constitué de trichlorofluorométhane et/ou trichlorotrifluoréthane, caractérisé en ce qu'il contient 0,05 à 5% en poids (sur la base du chlorofluoralcane) de diphényl-2,4 méthyl-4 pentène.